Europäisches Patentamt

European Patent Office

Office européen des brevets

(19)

(11) Publication number: **0 025 052**
**B1**

(12) **EUROPEAN PATENT SPECIFICATION**

(45) Date of publication of patent specification: 04.07.84

(21) Application number: 80900545.7

(22) Date of filing: 13.03.80

(86) International application number:
PCT/US80/00256

(87) International publication number:
**WO 80/01960 18.09.80 Gazette 80/21**

(51) Int. Cl.³: **G 03 B 17/26,** G 03 C 3/02,
B 65 H 75/18

(54) **FILM SUPPLY.**

(30) Priority: 14.03.79 US 20284

(43) Date of publication of application:
18.03.81 Bulletin 81/11

(45) Publication of the grant of the patent:
04.07.84 Bulletin 84/27

(84) Designated Contracting States:
DE FR GB

(56) References cited:
GB - A - 1 458 819
US - A - 1 454 812
US - A - 1 623 514
US - A - 3 234 024
US - A - 3 647 465

(73) Proprietor: EASTMAN KODAK COMPANY
343 State Street
Rochester New York 14650 (US)

(72) Inventor: EDWARDS, Evan Albert
2 Prospect Hill Road
Pittsford, NY 14534 (US)

(74) Representative: Pepper, John Herbert et al,
KODAK LIMITED Patent Department P.O. Box 114
190 High Holborn
London WC1V 7EA (GB)

## Description

The loading of photographic apparatus with light-sensitive roll film under ambient light conditions requires that some form of housing is used to exclude light from the filmstrip. Several constructions of film housing are known which are loadable into photographic apparatus and provide a passageway through which the filmstrip can pass out of the housing for use within the photographic apparatus. These are variously known as magazines, cartridges, cassettes, etc., but for uniformity in this description and the appended claims the term magazine will be applied to such a housing. Within such a housing the filmstrip is wound on the core of a reel or spool between the flanges thereof, and a leader portion extends from the passageway to enable the filmstrip to be attached to a take-up core, for example, so that the filmstrip may be withdrawn progressively from the magazine.

Such magazines which are intended to be loaded into photographic apparatus under ambient light conditions are referred to as "daylight load" magazines, and a light seal is provided at the entrance and/or exit passageway of the film chamber. It is customary to attach fabric-like material, commonly referred to as "plush," on the sides of the passageway. The plush has a pile depth sufficient to close the passageway to light, while permitting the film to pass therethrough. While the fabric-like material establishes an effective light seal, it may result in loose fabric particles depositing on the film. Further, dirt or other foreign particles picked up by the plush and held in contact with the film may scratch the surface of the film as it is drawn through the passageway.

Various proposals have been made for effecting a light seal without plush, but most of these entail a labyrinth film passageway which results in the rubbing of the film across a stationary, rigid surface of the magazine. Such rubbing could abrade the light-sensitive layer of the film as the film is drawn through the passageway.

It has been proposed in U.S. Patent No. 1,623,514 to supply a specific light-sensitive motion picture film on a supply spool or reel having a wider axial space between flanges radially outwardly of a pair of narrow annular shoulders than inwardly of the shoulders. The illustrated light-sensitive motion picture film substantially fills the narrow axial space when it is wound on the spool core, and a wider tapered and similarly perforated protective leader is wound on these narrower convolutions within the wider axial space. The leader shown is long enough to be threaded through the exposure gate of the motion picture camera and attached to the take-up spool thereof, and many turns of leader are provided within the wider axial space of the spool. This would reduce leakage of light through the perforations of the leader.

## Disclosure of the Invention

The present invention is, in effect, based upon the appreciation that reasonable protection against light-fogging of a wound image portion of a filmstrip within a magazine may be obtained without using such a long length of wider leader. The invention relates to a film supply with a supply spool and a filmstrip having a light-sensitive portion and a wider leader portion, the supply spool having a pair of flanges whose inwardly facing surfaces extend normally to the axis of the spool core, these surfaces each having an annular shoulder extending axially of the spool core, the facing surface radially inward of the shoulders being spaced apart by a predetermined distance to receive wound therebetween the light-sensitive portion of the filmstrip but not the wider leader portion, and the facing surfaces radially outwards of the shoulders being spaced apart to receive the wider leader portion therebetween characterized in that the filmstrip is so dimensioned lengthwise that when the filmstrip is wound on the spool at least one convolution of a non-image portion thereof is wound radially inwards of the annular shoulders to cooperate with the wider leader portion, which is opaque material, and the annular shoulders to provide a light seal for the wound image portion within a film magazine.

The wider leader portion may be free of perforations where it is wound upon the annular shoulders. The image portion may include a pre-exposed latent image border.

The film magazine passageway may have a wide region through which the wider leader portion can leave the film supply chamber, and a region narrower than the wider leader portion through which the image portion of the film can leave the film supply chamber.

Film magazine ribs extending into the film supply chamber may be arranged to hold the convolutions of the wider leader portion to the annular shoulders and prevent loose turns.

## Brief Description of the Drawings

In the detailed description of the preferred embodiment of the invention presented below, reference is made to the accompanying drawings in which:

Fig. 1 is a perspective view of a film magazine in accordance with the present invention;

Fig. 2 is a perspective view of a core adapted to be rotatably supported within the magazine of Fig. 1;

Fig. 3 is an elevational view partially in section of the magazine of Fig. 1, the core of Fig. 2, and a filmstrip wound on the core;

Fig. 4 is a fragmental view of the filmstrip of Fig. 3 unrolled and partially broken away; and

Fig. 5 is a sectional view taken along line 5—5 in Fig. 3.

Because film magazines are well known, the present description will be directed, in particular, to magazine elements forming part of, or cooperating more directly with, apparatus in accordance with the present invention. It is to be understood that magazine elements not specifically shown or described may take various forms well known to those skilled in the art.

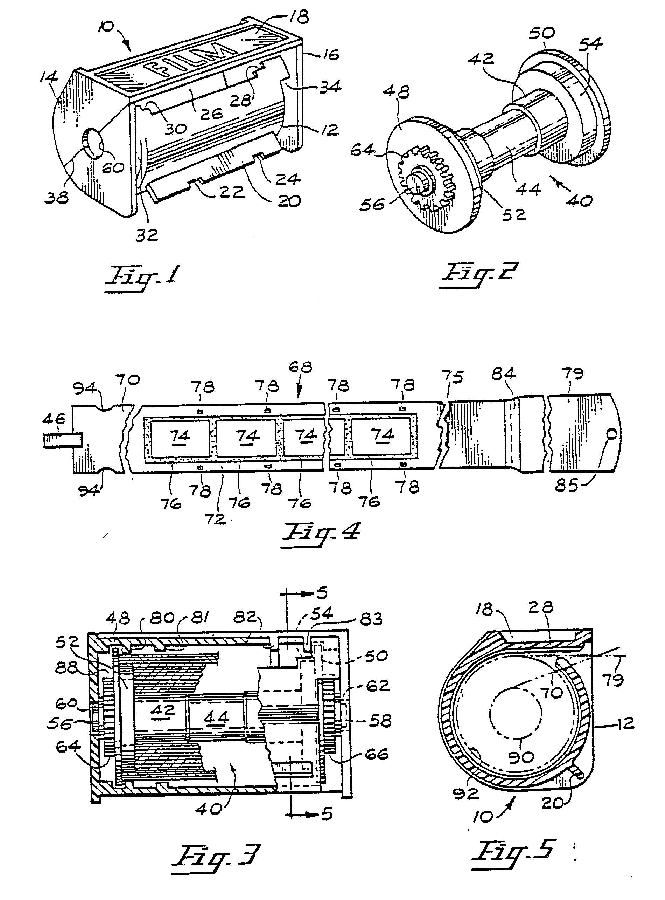

Fig. 1 shows a film magazine 10 having an annular wall 12 and a pair of opposed end walls 14 and 16 enclosing a film supply chamber. A recessed area 18 on the magazine is adapted to receive a label or other identification marking. The recess could accommodate a gasketted window in a camera door for viewing the label when the magazine is in a suitably designed camera. Since the gasket would fit within the recess, any light which might leak from under the gasket would be subjected to a tortuous path before it could reach film in the camera's exposure region.

A rib 20 provides a physically detectable coding means indicative of certain characteristics of the film in the magazine, such as, for example, the film's length, type, and/or speed. As illustrated, rib 20 has a pair of notches 22 and 24 which can be detected by suitable photofinishing apparatus, or by suitable camera structure adapted to effect an appropriate adjustment of the camera's mechanism, or by both. The bottom of end walls 14 and 16 are flat and squared off in one corner to provide both protection for rib 20 and a stable base upon which the magazine can rest in the camera referred to above. The magazine is then seated on the flat edges of its end walls by pressure from the resilient gasket around the camera's window above recessed label area 18.

The magazine is formed with a passageway 26 communicating with the film supply chamber within the magazine 10 so that a filmstrip can be led out through this passageway into a camera for exposure. After exposure of one or all of the image areas, the filmstrip can be rewound into the film supply chamber. The passageway has a wider portion close to recessed area 18 and a narrower portion away therefrom, these portions being formed by a pair of shoulders 28 and 30. Two other slot-like openings 32 and 34 between the annular wall 12 and the adjacent end walls 14 and 16, provide access to the interior of the magazine but outwardly of the film supply chamber. The rewind drive gear of a suitably designed camera may extend into these openings as explained hereinafter.

Preferably, magazine 10 is manufactured in two parts, as indicated by separation line 38, for assembly around a roll of film wound on a spool or reel 40 (Fig. 2). The two magazine parts are joined together, such as by adhesive or ultrasonic bonding, after assembly.

Referring specifically to Fig. 2, the film supply spool or reel 40 is provided with a pair of opposed flanges 48 and 50 which have their axially inwardly facing surfaces, extending normally to the axis of the spool, stepped to form annular axially-extending shoulders 52 and 54, respectively. The distance between the flanges at a point radially inwardly of shoulders 52 and 54 corresponds generally to that of the narrow portion of housing passageway 26, while the spacing between the flanges radially outwardly of the shoulders corresponds generally to that of the wide portion of passageway 26.

Spool 40 is rotatably supported within magazine 10 by two posts 56 and 58 which fit into respective holes 60 and 62. Two rewind gears 64 and 66 on core 40 are positioned to align with the magazine's gear access openings 32 and 34, respectively, when the magazine is assembled. A pair of gears is provided so that the magazine can be used in different designs of camera, the camera's rewind drive gearing being in alignment with either end of the magazine.

Fig. 4 shows a filmstrip 68 adapted to be received in magazine 10. The filmstrip has a trailer portion 70 which is attached in recess 44 of core 40 (Fig. 2) by tape 46. An image portion 72 of the filmstrip has a plurality of image areas 74 with preexposed latent-image borders 76. Film perforations 78 are provided at predetermined metering intervals along preferably the image portion of the filmstrip so that the image areas may be accurately positioned for exposure in a camera. The perforations may subsequently be used during the printing and/or cutting operations. A perforation has been provided on each lateral side of every frame to give the camera designer flexibility in locating the metering mechanism of a new camera adapted to receive the magazine.

Referring again to Fig. 3, it can be seen that the width of trailer portion 70 and image portion 72 is such that those portions of the filmstrip form convolutions around the core's film bearing surface 42 within the narrow spacing between flanges 48 and 50 and radially inwardly of shoulders 52 and 54. A non-image portion 75 of the filmstrip is provided between a leader portion 79 and the first image area 74 and portions 70, 72 and 75 are so dimensioned that at least one full convolution of film without image areas is wound between the flange shoulders. This non-image portion 75 preferably has no metering perforations or preexposed borders.

An opaque leader portion 79 is spliced onto non-image portion 75. The leader is provided with a hole 85 near the free end but is otherwise non-perforated and is wound upon flange shoulders 52 and 54 forming more than one convolution thereon. Inwardly extending ribs 80, 81, 82, 83 (Fig. 3) located around the interior wall of magazine 10 hold the leader convolutions snugly enough to shoulders 48 and 50 to prevent loose turns and light leakage but loosely enough to allow free rotation of reel 40. Ribs 80 and 83 also restrict light leakage into the film supply chamber from openings 32 and 34.

The leader is preferably polyester material which, compared to the acetate base commonly used for filmstrips, is more tear resistant and dimensionally stable. The dimension stability causes the leader to straighten as it extends through the passageway.

The three component structure described cooperates to form an extremely effective light barrier which negates the need for plush inserts. Additionally, referring to the upper left region of Fig. 3, a light seal is provided, wherein light in region 88 near rewind gear 64 must follow a tortuous path if it is to reach the film supply chamber even after passing the periphery of flange 48 such light must make a 90° turn, proceed radially inwardly along the inner surface of the flange to shoulder 52, turn 90° to axially follow the shoulder inwardly, and finally turn 90° again to pass the first convolution of film within the narrow spacing between flanges 48 and 50 before reaching a section of film having an image area 74.

In Fig. 5, magazine 10 is illustrated with the outline of a minimum diameter film roll and a maximum diameter film roll shown by phantom lines 90 and 92, respectively. At its maximum diameter, the film roll is large enough so that wide leader portion 79 feeds from the roll straight through passageway 26 in magazine 10 above shoulders 28 and 30. After leader portion 79 has been withdrawn from the magazine, image portion 72 and trailer portion 70 can be unrolled from the decreasing diameter roll through the narrow portion of passageway 26 without touching the lower edge of the passageway. Accordingly, the risk of abrasion of the emulsion surface of the film against magazine 10 is minimized.

Two "end of film" notches 94 have been provided after the end frame so that cameras equipped with suitable detectors may be conditioned automatically to rewind the filmstrip back into the film supply chamber.

The invention has been described in detail with particular reference to a preferred embodiment thereof, but it will be understood that variations and modifications can be effected within the scope of the invention. Thus the filmstrip may be attached to the core by means other than tape 46.

Furthermore, the spool may be adapted to be driven for film rewind by conventional means instead of by rewind gears as shown.

## Claims

1. Film supply with a supply spool (40) and a filmstrip having a light-sensitive portion (68) and a wider leader portion (79), the supply spool (40) having a pair of flanges (48, 50) whose inwardly facing surfaces extend normally to the axis of the spool core, these surfaces each having an annular shoulder (52, 54) extending axially of the spool core, the facing surfaces radially inward of the shoulders being spaced apart by a predetermined distance to receive wound therebetween the light-sensitive portion of the filmstrip (68) but not the wider leader portion (79), and the facing surfaces radially outwards of the shoulders being spaced apart to receive the wider leader portion (79) therebetween characterized in that the filmstrip (68) is so dimensioned lengthwise that when the filmstrip is wound on the spool at least one convolution of a non-image portion (75) thereof is wound radially inwards of the annular shoulders (52, 54) to cooperate with the wider leader portion (79), which is of opaque material, and the annular shoulders (52, 54) to provide a light seal for the wound image portion within a film magazine.

2. Film supply as claimed in Claim 1, characterized in that the wider leader portion (79) is free of perforations where it is wound upon the annular shoulders.

3. Film supply as claimed in Claim 1, characterized in that the said non-image portion (75) is free of perforations.

4. Film supply as claimed in Claim 1, characterized in that the said image portion (68) includes a pre-exposed latent image border (76).

5. Film supply as claimed in Claim 1, characterized in that the filmstrip has at least one row of perforations (78) spaced at predetermined metering intervals along the said image portion.

6. Film supply as claimed in Claim 1, having a film supply chamber (12, 14, 16) and a passageway (26) through which the filmstrip (68) can be led from the film supply chamber, the said supply spool (40) being mounted in the magazine for rotation about its axis.

7. Film supply as claimed in Claim 6, characterized in that the said passageway has a wide region (28, 30) through which the said wider leader portion (79) can leave the film supply chamber and a region narrower than the said wider leader portion through which the image portion of the film can leave the film supply chamber.

8. Film supply as claimed in Claim 6, characterized in that magazine ribs (80, 81, 82, 83) extending into the film supply chamber are arranged to hold the convolutions of the said wider leader portion (79) to the annular shoulders (52, 54) and prevent loose turns.

9. Film supply as claimed in Claim 6, characterized in that the magazine has an external recessed area (18), the recessed area including an identification for the filmstrip in the magazine.

10. Film supply as claimed in Claim 6, characterized in that the flanges (48, 50) of the supply spool (40) divide the interior of the magazine into a central film supply chamber, to which the said passageway (26) provides access, and outer areas which are accessible for rewinding the supply spool, a light seal being provided between these areas and the film supply chamber.

## Revendications

1. Débiteur de film muni d'une bobine débitrice (40) et d'une bande de film comprenant une partie photosensible (68) et une partie d'amorce plus large (79), la bobine débitrice (40) comprenant deux joues (48, 50) dont les faces intérieures en regard s'étendent perpendiculairement à l'axe du noyau de la bobine, ces surfaces comprenant chacune un épaulement annulaire (52, 54) s'étendant axialement par rapport au noyau de la bobine, les surfaces en regard, radiales et intérieures, de ces épaulements étant écartées d'une distance prédéterminée qui convient pour recevoir entre elles un enroulement de la partie photosensible (68) de la bande de film mais qui ne convient pas à la réception de la partie d'amorce plus large (79), et les surfaces en regard radiales et extérieures des épaulements étant écartées de manière à recevoir entre elles la partie d'amorce plus large (79), caractérisé en ce que la bande de film présente une longueur telle que lorsqu'elle est enroulée sur la bobine, au moins une spire d'une partie (75) non destinée à la formation d'image, est enroulée dans l'espace qui se situe radialement entre les épaulements annulaires (52, 54) de manière à coopérer avec la partie d'amorce plus large (79), constituée en un matériau opaque, et les épaulements annulaires (52, 54) pour isoler de la lumière la partie photosensible enroulée dans un magasin de film.

2. Débiteur de film conforme à la revendication 1, caractérisé en ce que la partie d'amorce plus large (79) ne comprend pas de perforations là où elle est enroulée sur les épaulements annulaires.

3. Débiteur de film conforme à la revendication 1, caractérisé en ce que la partie (75) ne comprend pas de perforations.

4. Débiteur de film conforme à la revendication 1, caractérisé en ce que la partie photosensible (68) comprend une marge (76) préexposée.

5. Débiteur de film conforme à la revendication 1, caractérisé en ce que la bande de film comprend au moins une rangée de perforations (78) écartées les unes des autres d'un intervalle de mesure prédéterminé sur la partie photosensible.

6. Débiteur de film conforme à la revendication 1, comprenant un compartiment débiteur (12, 14, 16) et une fente (26) par laquelle on peut faire sortir la bande de film (68) du compartiment, ladite bobine débitrice (40) étant montée à rotation autour de son axe dans le magasin.

7. Débiteur de film conforme à la revendication 6, caractérisé en ce que la dite fente présente une partie large (28, 30) par laquelle la partie d'amorce plus large (79) peut quitter le compartiment débiteur, et une partie plus étroite que cette partie d'amorce plus large, par laquelle la partie photosensible de la bande de film peut quitter le compartiment débiteur.

8. Débiteur de film conforme à la revendication 6, caractérisé en ce que des nervures (80, 81, 82, 83) du magasin débordant dans le compartiment débiteur du chargeur sont agencées de manière à maintenir les spires de la partie d'amorce (79) contre les épaulements annulaires (52, 54), pour empêcher l'éclatement de ces spires.

9. Débiteur conforme à la revendication 6, caractérisé en ce que le magasin présente une surface externe en renfoncement (18), cette surface comprenant des marques d'identification du film contenu dans le magasin.

10. Débiteur conforme à la revendication 6, caractérisé en ce que les joues (48, 50) de la bobine débitrice (40) divisent l'intérieur du magasin en un compartiment débiteur central auquel la fente (26) donne accès, et des zones extérieures accessibles pour le rembobinage du film sur la bobine, des moyens d'étanchéité à la lumière étant agencées entre ces zones et le compartiment débiteur.

## Patentansprüche

1. Filmvorratseinrichtung mit einer Vorratsspule (40) und einem einen lichtempfindlichen Abschnitt (68) und einen breiteren Vorlaufabschnitt (79) aufweisenden Filmstreifen, wobei die Vorratsspule (40) zwei Flansche (48, 50) besitzt, deren nach innen weisende Flächen senkrecht zur Achse des Spulenkerns verlaufen und jeweils mit einem ringförmigen axial zum Spulenkern angeordneten Ansatz (52, 54) versehen sind, und wobei die einander zugewandten, radial innen liegenden Flächen der Ansätze in einem solchen vorbestimmten Abstand voneinander angeordnet sind, daß der lichtempfindliche Abschnitt des Filmstreifens (68), nicht jedoch der breitere Vorlaufabschnitt (79) zwischen ihnen aufgewickelt werden kann, während die radial außen liegenden, einander zugewandten Flächen der Ansätze in einem solchen Abstand voneinander liegen, daß der breitere Vorlaufabschnitt (79) zwischen ihnen Aufnahme findet, dadurch gekennzeichnet, daß der Filmstreifen (68) in der Längsrichtung so dimensioniert ist, daß beim Aufwickeln des Filmstreifens auf die Vorratsspule mindestens eine Windung eines bildfreien Abschnitts (75) zwischen den radial innen liegenden Flächen der ringförmigen Ansätze (52, 54) so angeordnet ist, daß er mit dem breiteren, aus undurchsichtigem Material bestehenden Vorlaufabschnitt (79) und den ringförmigen Ansätzen (52, 54) so zusamenwirkt, daß für den aufgewickelten Bildteil innerhalb einer Filmkassette eine Lichtabschirmung entsteht.

2. Filmvorratseinrichtung nach Anspruch 1, dadurch gekennzeichnet, daß der breitere Vorlaufabschnitt (79) dort, wo er auf die ringförmigen Ansätze aufgewickelt ist, keine Perforationen aufweist.

3. Filmvorratseinrichtung nach Anspruch 1, dadurch gekennzeichnet, daß der bildfreie Abschnitt (75) keine Perforationen aufweist.

4. Filmvorratseinrichtung nach Anspruch 1, dadurch gekennzeichnet, daß der Bildteil (68) eine vorbelichtete latente Bildumrandung (76) aufweist.

5. Filmvorratseinrichtung nach Anspruch 1, dadurch gekennzeichnet, daß der Filstreifen mindestens eine Reihe von Perforationen (78) aufweist, die in vorbestimmten Transportschritten längs des Bildteils angeordnet sind.

6. Filmvorratseinrichtung nach Anspruch 1 mit einer Filmvorratskammer (12, 14, 16) und einem Führungskanal (26), durch den der Filmstreifen (68) aus der Filmvorratskammer herausgeführt werden kann, wobei die Vorratsspule (40) in der Kassette um ihre Achse drehbar gelagert ist.

7. Filmvorratseinrichtung nach Anspruch 6, dadurch gekennzeichnet, daß der Führungskanal einen breiten Bereich (28, 30) aufweist, durch den der breitere Vorlaufabschnitt (79) aus der Filmvorratskammer herauslaufen kann, sowie einen Bereich, der schmaler ist als der breitere Vorlaufabschnitt und durch den der Bildteil des Films aus der Filmvorratskammer herauslaufen kann.

8. Filmvorratseinrichtung nach Anspruch 6, dadurch gekennzeichnet, daß in die Filmvorratskammer ragende Kassettenrippen (80, 81, 82, 83) so angeordnet sind, daß sie die Windungen des breiteren Vorlaufabschnitts (79) auf den ringförmigen Ansätzen (52, 54) festhalten und ein Lockern der Wicklung verhindern.

9. Filmvorratseinrichtung nach Anspruch 6, dadurch gekennzeichnet, daß die Kassette auf ihrer Außenfläche einen vertieften Bereich (18) aufweist, in dem sich eine Identifizierung für den in der Kassette enthaltenen Filmstreifen befindet.

10. Filmvorratseinrichtung nach Anspruch 6, dadurch gekennzeichnet, daß die Flansche (48, 50) der Vorratsspule (40) das Innere der Kassette in eine mittlere über den Führungskanal (26) zugängliche Filmvorratskammer und in äußere zum Rückspulen der Vorratsspule zugängliche Bereiche unterteilen, wobei zwischen diesen Bereichen und der Filmvorratskammer eine Lichtabschirmung vorgesehen ist.

*Fig.1*

*Fig.2*

*Fig.4*

*Fig.3*

*Fig.5*